(19) Europäisches Patentamt
European Patent Office
Office européen des brevets

(11) **EP 1 792 421 B1**

(12) **FASCICULE DE BREVET EUROPEEN**

(45) Date de publication et mention
de la délivrance du brevet:
**29.02.2012 Bulletin 2012/09**

(21) Numéro de dépôt: **05800107.4**

(22) Date de dépôt: **19.09.2005**

(51) Int Cl.:
*H04B 17/00* (2006.01)  *H04L 1/20* (2006.01)

(86) Numéro de dépôt international:
**PCT/FR2005/050762**

(87) Numéro de publication internationale:
**WO 2006/032817 (30.03.2006 Gazette 2006/13)**

(54) **ESTIMATION DU RAPPORT SIGNAL A INTERFERENCE PLUS BRUIT EN SORTIE D'UN RECEPTEUR OFDM-CDMA**

BEWERTUNG DES VERHÄLTNISSES SIGNAL-INTERFERENZ PLUS RAUSCHEN BEIM AUSGANG EINES OFDM-CDMA-EMPFÄNGERS

ESTIMATION OF A SIGNAL-TO-INTERFERENCE PLUS NOISE RATIO AT THE OUTPUT OF AN OFDM CDMA RECEIVER

(84) Etats contractants désignés:
**AT BE BG CH CY CZ DE DK EE ES FI FR GB GR HU IE IS IT LI LT LU LV MC NL PL PT RO SE SI SK TR**

(30) Priorité: **21.09.2004 FR 0452107**

(43) Date de publication de la demande:
**06.06.2007 Bulletin 2007/23**

(73) Titulaire: **Commissariat à l'Énergie Atomique et aux Énergies Alternatives**
**75015 Paris (FR)**

(72) Inventeurs:
 • **DES NOES, Mathieu**
  **F-38000 Grenoble (FR)**
 • **KTENAS, Dimitri**
  **F-38600 Fontaine (FR)**
 • **MARET, Luc**
  **38210 POLIENAS (FR)**
 • **NASSER, Youssef**
  **F-38406 Saint Martin d'Heres (FR)**

(74) Mandataire: **Poulin, Gérard et al**
**BREVALEX**
**95, rue d'Amsterdam**
**75378 Paris Cedex 8 (FR)**

(56) Documents cités:
**EP-A- 1 396 956**

• **STEENDAM, MOENCLAEY: "The effect of synchronisatoin errors on MC-CDMA performance" IEEE INTERNATIONAL CONFERENCE ON COMMUNICATIONS, 6 juin 1999 (1999-06-06), pages 1510-1514, XP000903624 NEW YORK, US cité dans la demande**
• **EVANS, TSE: "Large system performance of linear multiuser receivers in multipath fading channels" IEEE TRANSACTIONS ON INFORMATION THEORY, vol. 46, no. 6, septembre 2000 (2000-09), pages 2059-2078, XP002329715 NEW YORK, US cité dans la demande**
• **SCHMIDT ET AL.: "Channel tracking in wireless OFDM systems" 5TH WORLD MULTI-CONFERENCE ON SYSTEMICS, CYBERNETICS AND INFORMATICS, 22 juillet 2001 (2001-07-22), XP002329716 cité dans la demande**
• **HELARD ET AL.: "Multicarrier CDMA techniques for future wideband wireless networks" ANNALES DES TELECOMMUNICATIONS, vol. 56, no. 5/6, mai 2001 (2001-05), pages 260-274, XP001082129 LAUSSANE, CH cité dans la demande**
• **CHAUFRAY ET AL.: "Asymptotic analysis of optimum and sub-optimum CDMA downlink MMSE receivers" INTERNATIONAL SYMPOSIUM ON SIGNAL PROCESSING AND ITS APPLICATIONS, vol. 1, 1 juillet 2003 (2003-07-01), pages 493-496, XP010653236 PISCATAWAY, US cité dans la demande**

• DEBBAH ET AL.: "Asymptotic performance analysis for redundant block precoded OFDM systems with mmse equalization" IEEE SIGNAL PROCESSING WORKSHOP ON STATISTICAL SIGNAL PROCESSING, 6 août 2001 (2001-08-06), pages 389-392, XP010561158 PISCATAWAY, US ISBN: 0-7803-7011-2

**Description**

**DOMAINE TECHNIQUE ET ART ANTÉRIEUR**

La présente invention concerne le domaine du traitement du signal.

Elle a notamment pour objet un procédé d'estimation du rapport signal à interférence plus bruit (RSIB) pour une liaison descendante d'un système multiporteuses avec un accès multiple de type CDMA.

L'invention trouve une application en télécommunications, à savoir les systèmes de communications exploitant la technique d'accès multiple CDMA combinée à une transmission OFDM :

- MC-CDMA,
- MC-DS-CDMA,
- Etalement temps/fréquence à 2 dimensions.

L'invention permet de tenir compte de l'effet des erreurs de synchronisation, tout en supposant que les codes d'étalement sont orthogonaux. Il s'agit du décalage entre les fréquences porteuses de l'émetteur et du récepteur et du décalage entre les horloges d'échantillonnage de l'émetteur et du récepteur.

Le RSIB est utilisé, par exemple, pour estimer le taux d'erreur binaire au niveau du récepteur, ce qui indique la qualité de la communication. Il peut aussi être employé par des algorithmes de contrôle de puissance.

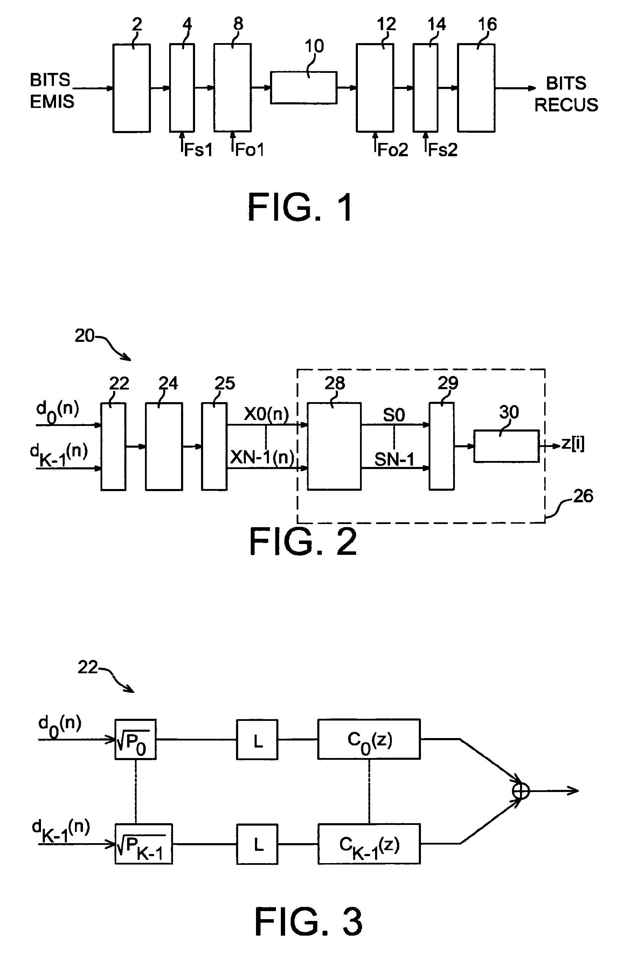

La figure 1 présente le schéma d'une transmission radio numérique classique. Les bits à émettre sont d'abord traités et mis en forme par un émetteur numérique 2.

Le train d'échantillons numériques est alors converti en analogique par un convertisseur numérique/analogique (CNA) 4 fonctionnant à la fréquence FS1.

Le signal résultant est ensuite filtré, amplifié et transposé à la fréquence $F_{o1}$, puis transmis par l'intermédiaire d'une antenne 8.

Le signal émis traverse alors le canal de propagation 10 avant sa réception.

Le signal en sortie d'une antenne de réception 12 est alors amplifié, filtré et transposé en bande de base par une fréquence $F_{o2}$.

Le signal analogique est alors échantillonné à la fréquence FS1 par le convertisseur analogique/numérique (CAN) 14 puis traité par le récepteur numérique 16 pour délivrer les bits reçus.

On suppose par la suite que les filtres des têtes RF de l'émetteur et du récepteur sont pris en compte dans le canal global.

En cas de synchronisation parfaite, on a $F_{S1} = F_{S2}$ et $F_{o1} = F_{o2}$.

Dans un système réel, il existe un décalage entre les fréquences porteuses de l'émetteur et du récepteur $\Delta F = F_{o1} - F_{o2}$ et un décalage entre les horloges d'échantillonnage de l'émetteur et du récepteur $\Delta T = 1/F_{S1} - 1/F_{S2}$.

Dans la suite, on se réfère à un système utilisant un étalement temps/fréquence qui sera désigné par le terme générique OFDM-CDMA. Ce système modélise le cas général : si l'étalement est uniquement fréquentiel, on retrouve un système MC-CDMA classique et si l'étalement est uniquement temporel, on retrouve un système MC-DS-CDMA.

On décrit aussi l'effet des décalages $\Delta F$ et $\Delta T$ sur la modélisation du canal en bande de base.

La figure 2 présente le modèle général d'un émetteur numérique OFDM-CDMA 20 pour une liaison descendante d'une station de base vers un terminal mobile.

Les données des différents utilisateurs sont d'abord traitées par un module d'étalement 22, les signaux étalés sont ensuite traités par un module 24 d'allocation des « chips » qui place ces derniers sur une grille temps/fréquence, puis une conversion série parallèle est réalisée par le module 25.

Le signal résultant est alors transmis à un modulateur OFDM 26, utilisant un module 28 de transformée de Fourier inverse rapide (IFFT) de taille N. les données subissent alors une conversion parallèle - série (module 29).

Une description des techniques classiques de l'OFDM est présentée dans le document de W. Zhendao et G. B. Giannakis, Wireless Multicarrier Communications - Where Fourier meets Shannon, IEEE Signal Processing Magazine, Vol. 17, Issue : 3 , May 2000.

La figure 3 détaille le module d'étalement 22 de l'émetteur.

A chaque symbole $d_k(n)$ de l'utilisateur k est d'abord affectée une amplitude $\sqrt{Pk}$. Puis il est procédé à une élévation de cadence d'un facteur L, et enfin à un filtrage numérique par $c_k(z)$, dont les coefficients sont égaux aux chips de la séquence d'étalement de l'utilisateur k. Les signaux étalés sont ensuite additionnés.

Le module 24 d'allocation des chips répartit les échantillons provenant du module 22 d'étalement sur une grille temps/fréquence. On suppose que le facteur d'étalement $L = S_F x S_T$ où $S_F$ est le facteur d'étalement dans le domaine fréquentiel et $S_T$ dans le domaine temporel.

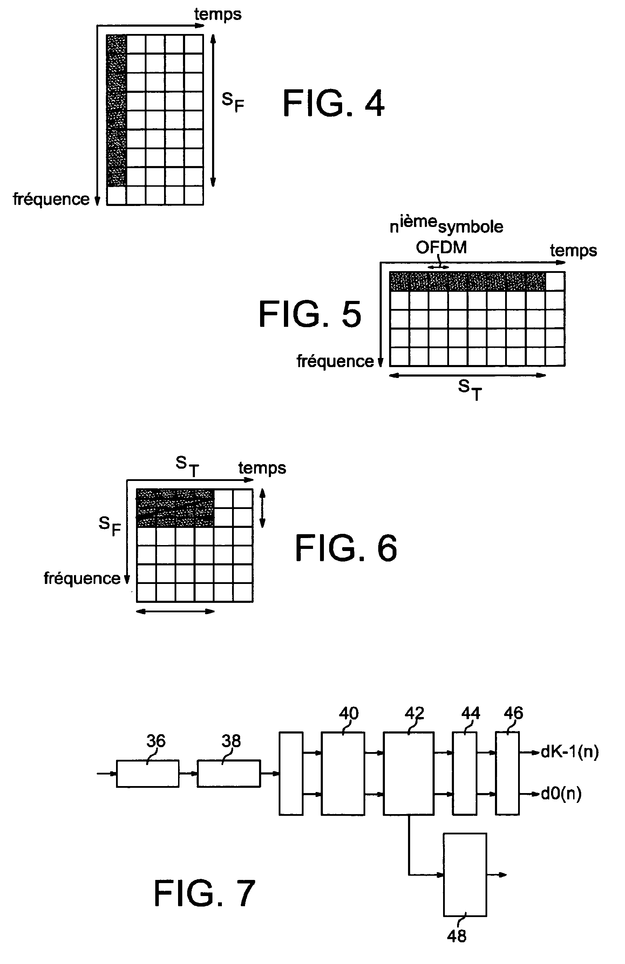

Si $S_T = 1$, on retrouve les caractéristiques d'un système MC-CDMA conventionnel. Comme illustré en figure 4, on transmet alors $D = N/S_F$ symboles de données par code dans un symbole OFDM.

Si $S_F$ = 1, on retrouve les caractéristiques d'un système MC-DS-CDMA conventionnel. Comme illustré en figure 5, on transmet alors 1 symbole de données par code sur $S_T$ symboles OFDM.

Si $S_F$ et $S_T$ sont quelconques on a un étalement temps/fréquence. Comme illustré en figure 6, on transmet alors D = N/$S_F$ symboles de données par code sur $S_T$ symboles OFDM.

En sortie du module 24 d'allocation des chips, on a un vecteur de taille N correspondant à la taille de la FFT :

$$x_i\big[qS_F + p\big] = \sum_{k=0}^{K-1} \sqrt{P_k}\, d_k[q] c_k[pS_T + i]$$

$$i = 0, ..., S_T - 1; q = 0, ..., D - 1, p = 0, ..., S_F - 1$$

Après transposition dans le domaine temporel par l'intermédiaire de l'IFFT, des moyens 30 (figure 2) permettent d'ajouter un préfixe cyclique. Il contient $N_G \geq$ W-1 échantillons, où W est la durée maximale de la réponse impulsionnelle du canal global, comme décrit dans le document de W. Zhendao et al. déjà décrit ci-dessus.

La structure d'un récepteur numérique OFDM-CDMA conventionnel est présentée en figure 7.

Un module 36 de synchronisation grossière réalise :

- La détection du début du symbole OFDM,
- L'estimation initiale des décalages ΔF et ΔT. Cette estimation est « grossière » dans le sens où la variance de l'estimation est élevée. Cela permet de rentrer dans la plage de fonctionnement du récepteur, mais nécessite une correction « fine » pour atteindre les performances désirées. Ainsi, la synchronisation est réalisée en 2 étapes.

Après une synchronisation « grossière », le préfixe cyclique est éliminé (module ou moyens 38) et le signal est conditionné en vecteurs de N échantillons : $M_i$(m), m=0, ..., N-1. L'index i indique le numéro du symbole OFDM reçu.

Un module ou des moyens 40 de transformée de Fourier rapide (FFT) permettent de réaliser la transformation inverse de celle réalisée lors de l'émission (figure 2).

On trouve ensuite des moyens 42 pour estimer chaque canal et la puissance reçue correspondante, des moyens 44 égaliseurs, des moyens 46 de corrélation.

Des moyens 48 permettent de calculer une estimation RSIB (Rapport Signal à Interférence plus Bruit).

De manière connue ce rapport est estimé en faisant des approximations sur les codes : ceux-ci sont supposés valoir aléatoirement +1 et -1.

Le rapport RSIB est donc systématiquement sous - estimé.

On perd en outre, avec cette estimation, l'information d'orthogonalité des codes.

Il se pose donc le problème de trouver un nouveau procédé d'estimation du rapport RSIB, plus fiable.

**EXPOSÉ DE L'INVENTION**

L'invention concerne d'abord un procédé d'estimation du rapport RSIB d'une transmission de type OFDM - CDMA, cette dernière mettant en oeuvre des codes (Ck) d'étalement, dans lequel ce rapport est estimé indépendamment de la valeur de ces codes.

Un tel procédé permet de s'affranchir des approximations nécessaires sur les codes, telles que pratiquées dans l'art antérieur.

L'invention permet notamment l'estimation du RSIB :

- pour un système OFDM-CDMA exploitant un étalement à 2 dimensions, dans les domaines temporel et fréquentiel,
- ou pour un système OFDM-CDMA exploitant un étalement à 2 dimensions, avec un canal variant dans le temps,

Si les codes sont orthogonaux, le rapport RSIB peut être estimé en tenant compte de l'orthogonalité des codes.

Comme expliqué ci-dessus, les codes d'étalement peuvent être à deux dimensions, ou être à une dimension, par exemple de type MC - DS - CDMA.

Le rapport RSIB peut être calculé à l'aide des formules suivantes :

$$E|I_0|^2 = P_0 \big| tr\big(G(q) A(q,q)\big)\big|^2$$

$$E|I_1|^2 = P_0 \sum_{\substack{n=0 \\ n \neq q}}^{D-1} |tr(G(q)A(n,q))|^2$$

$$E|I_2|^2 = \alpha \overline{p} \sum_{n=0}^{D-1} \left( tr\left(G(q)A(n,q)A(n,q)^H G(q)^H\right) - |tr(G(q)A(n,q))|^2 \right)$$

$$E|I_3|^2 = \sigma^2 tr\left(G(q)G(q)^H\right)$$

dans lesquelles :

- $I_0$ est l'amplitude du signal utile pour un utilisateur après égalisation et corrélation,
- $I_1$ représente les interférences générées par les données de l'utilisateur considéré dans les autres sous-bandes,
- $I_2$ est le bruit d'accès multiple créé par les autres codes d'étalement,
- $I_3$ est le bruit gaussien filtré par l'égaliseur et la séquence de l'utilisateur considéré,
- $\alpha$ est la charge du système et $\overline{p}$ est la puissance moyenne reçue,
- $P_0$ est la puissance du signal étalé avec le code d'étalement dont on souhaite calculer le RSIB,
- A et G sont respectivement les matrices du canal d'atténuation et d'égalisation,
- D est le nombre de symboles de données par code sur ST symboles OFDM.

L'invention concerne également un procédé de réception de signaux transmis selon une transmission de type OFDM - CDMA, dans lequel il est procédé à une égalisation indépendante des codes d'étalement, puis à un procédé d'estimation du rapport RSIB de la transmission tel que décrit ci-dessus.

Elle concerne également un procédé de réception de signaux transmis selon une transmission de type OFDM - CDMA, dans lequel il est procédé à une égalisation de type MRC ou EGC ou ZF ou MMSEC, puis à un procédé d'estimation du rapport RSIB de la transmission tel que décrit ci-dessus.

Elle concerne également un procédé d'émission de signaux dans lequel :

- des signaux sont transmis par un dispositif transmetteur vers des dispositifs de téléphonie sans fil,
- au moins un desdits dispositifs calcule ou estime le rapport RSIB de la transmission tel que décrit ci-dessus,
- ce rapport est retransmis au dispositif transmetteur.

L'invention concerne également un dispositif de téléphonie sans fil comportant des moyens de calcul du rapport RSIB d'une transmission de type OFDM - CDMA, cette dernière mettant en oeuvre des codes ($C_k$) d'étalement, dans lequel ce rapport est estimé indépendamment de la valeur de ces codes.

Si les codes d'étalement sont orthogonaux, le rapport RSIB peut être estimé en tenant compte de l'orthogonalité ce ces codes.

Dans un tel dispositif, le rapport RSIB peut être estimé selon les formules indiquées ci-dessus.

## BRÈVE DESCRIPTION DES DESSINS

- la figure 1 représente le schéma d'une transmission radio numérique selon l'art antérieur,
- la figure 2 représente le schéma d'un émetteur MC - CDMA selon l'art antérieur,
- la figure 3 représente le schéma de moyens d'étalement,
- les figures 4 à 6 représentent des schémas d'étalement, respectivement MC - CDMA, MC-DS-CDMA et en temps-fréquence,
- la figure 7 représente le schéma d'un récepteur OFDM - CDMA,
- la figure 8 représente le spectre d'un signal reçu par un dispositif de téléphonie mobile,
- les figures 9 et 10 représentent des structures d'un système de diffusion de messages sur dispositifs de téléphonie mobile et un schéma de composants d'un dispositif de téléphonie mobile.

**EXPOSÉ DÉTAILLÉ DE MODES DE RÉALISATION PARTICULIERS**

Un procédé d'estimation du rapport RSIB selon l'invention va maintenant être décrit.

Il va d'abord être procédé à une modélisation d'un canal vu en sortie de la FFT, puis du signal reçu en sortie du module de corrélation (module 46 de la figure 7).

La méthode d'estimation du RSIB selon l'invention pourra ensuite être exposée.

Dans la suite, on utilise les éléments suivants :

- $g_i(k)$ : coefficient de l'égaliseur pour la $k^{ième}$ sous-porteuse du $i^{ième}$ symbole OFDM.
- P0 : puissance du signal étalé sur un code d'étalement dont on souhaite calculer le RSIB.
- $\bar{p}$ : puissance moyenne des codes d'étalement.
- $\Delta F = F02 - F01$ : décalage des fréquences porteuses entre l'émetteur et le récepteur,
- $\Delta T$ : décalage des horloges d'échantillonnage entre l'émetteur et le récepteur.
- $\sigma^2$ : variance du bruit gaussien additif.
- L : longueur des codes d'étalement.
- K : nombre de codes d'étalement transmis.
- N : taille de la FFT.

On note également $\alpha = K/L$ la charge du système et $\bar{p} = \dfrac{1}{K}\sum_{k=0}^{K-1} p_k$ la puissance moyenne reçue.

La plupart sont en général connus préalablement à l'estimation du RSIB.

Certains paramètres sont connus par l'intermédiaire de la signalisation et d'autres peuvent être obtenus avec un mécanisme d'estimation de canal, comme décrit par exemple dans l'article de H.Schmidt et al. « Channel Tracking in Wireless OFDM Systems », SCI 2001, Orlando, Florida, 22 - 25 July 2001.

La transmission d'un signal est préalablement réalisée comme expliqué ci-dessus en relation avec les figures 2 - 7, l'invention s'appliquant de préférence à un système d'étalement à une dimension (MC - DS - CDMA, avec un schéma d'étalement comme illustré sur la figure 5, ou MC - CDMA avec un schéma d'étalement comme illustré sur la figure 4), ou à un système d'étalement temps fréquence (donc avec un schéma d'étalement comme illustré sur la figure 6, avec $S_F$ et $S_T$ tous deux #1).

Modélisation du canal :

Comme expliqué dans l'article Steendam, Moeneclaey : "The effect of synchronisation errors on MC-CDMA performance", IEEE international conference on communications, 6 juin 1999 (1999-06-06), pages 1510 - 1514, New York, US, qui étudie la sensibilité des systèmes MC-CDMA vis-à-vis des erreurs de synchronisation et l'influence de ces erreurs sur les performances des systèmes MC-CDMA, $H_{nL}+s_{(t_i,m)}$ représente l'atténuation de la sous-porteuse nL+s en sortie de la FFT, lorsque l'instant d'échantillonnage est $t_{i,m} = i (N +N_G) (T_S + \Delta T) + m(T_S + \Delta T)$ (m=0, ..., N -1 et $T_s=1/ F_{S2}$) :

$$H_{nS_F+s}(t_{i,m}) = \sum_{u=-\infty}^{+\infty} e^{j\theta_{i,m}} H\left(\frac{nS_F+s}{NT_S}+\frac{u}{T_S},i\right) e^{j2\pi(\frac{nS_F+s}{N}+u)\delta_{i,m}} \quad (1)$$
$$n = 0,...,D-1, s = 0,...,S_F-1$$

Cette formule vaut pour une synchronisation non parfaite. $H\left(\frac{e(nS_F+s)}{NT_S},i\right)$ est l'atténuation du canal pour la sous-porteuse $nS_F + s$ du $i^{ième}$ symbole OFDM, en cas de synchronisation parfaite. On suppose donc que le canal peut varier d'un symbole OFDM à un autre (en fonction de i).

La réponse fréquentielle du canal est supposée centrée autour de la fréquence nulle :

$$e(k) = \begin{cases} k \text{ si } k \leq N/2 \\ k - N \text{ si } k \geq N/2 \end{cases}$$

Les décalages résiduels après synchronisation grossière sont pris en compte de la façon suivante :

$$\phi_{i,m} = 2\pi\Delta F\big(m + i(N + N_G)\big)T_S$$

$$\varepsilon_{i,m} = \big(m + i(N + N_G)\big)\frac{\Delta T}{T_S} \qquad\qquad (2)$$

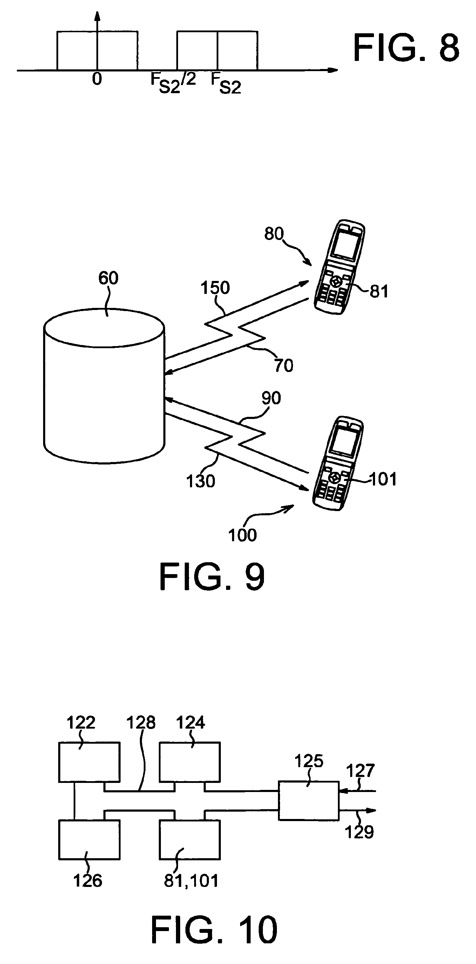

La figure 8 présente le spectre du signal reçu après échantillonnage à la fréquence FS2. Généralement, des sous-porteuses sont annulées de part et d'autre du spectre afin d'éliminer les problèmes de repliement. Ainsi le modèle (1) ci-dessus du canal se simplifie en :

$$H_{nS_F+s}(t_{i,m}) = e^{j\phi_{i,m}} H\left(\frac{e(nS_F + s)}{NT_S}, i\right) e^{j2\pi\frac{e(nS_F+s)}{N}\varepsilon_{i,m}} \qquad (3)$$

Modélisation du signal après égalisation (par les moyens 44) et corrélation (par les moyens 46) :
Dans ce paragraphe, nous allons présenter les traitements pour décoder les symboles de l'utilisateur k=0. Les résultats obtenus sont ensuite identiques pour les autres utilisateurs.
On suppose aussi que les coefficients de l'égaliseur sont calculés indépendamment des codes d'étalement.
Il peut s'agir des égaliseurs MRC, EGC, ZF ou MMSEC que l'on trouve exposés dans l'article de Maryline Hélard, Rodolphe Le Gouable, J.F Hélard, J.Y. Baudais, « Multicarrier CDMA techniques for future wideband wireless networks", Ann. Telecom 56, n˚5-6, pp. 260-274. 2001.
Au niveau du récepteur, après suppression de l'intervalle de garde, puis FFT, puis égalisation avec un coefficient $g_i[qS_F+p]$ par sous-porteuse et corrélation, le symbole estimé est :

$$\hat{d}_0[q] = \frac{1}{\sqrt{N}} \sum_{p=0}^{S_F-1}\sum_{i=0}^{S_T-1} g_i[qS_F + p]c_0^*[pS_T + i]\sum_{m=0}^{N-1} r_i[m]e^{j\frac{2\pi n(qS_F+p)}{N}}$$

$$+ \sum_{p=0}^{S_F-1}\sum_{i=0}^{S_T-1} g_i[qS_F + p]c_0^*[pS_T + i]w_i[qS_F + p] \qquad\qquad (4)$$

où :

$$r_i[m] = \frac{1}{\sqrt{N}} \sum_{n=0}^{D}\sum_{s=0}^{S_F-1} x_i[nS_F + s]H_{nS_F+s}(t_{i,m})e^{-j2\pi\frac{m(nS_F+s)}{N}}$$

est le signal reçu échantillonné aux instants ti,m = i (N +N$_G$) (T$_S$ + ΔT) + m(T$_S$ + ΔT) (m=0, ..., N -1), et w$_i$[p] un échantillon du bruit complexe gaussien de variance σ$^2$.
Définissons l'élément T$_u$(n,q) (s,p) :

$$T_u(n,q)(s,p) = \frac{1}{N}\sum_{m=0}^{N-1} e^{j\phi_{u,m}} H\left(\frac{e(nS_F+s)}{NT_S},u\right) e^{j2\pi\frac{e(nS_F+s)}{N}\varepsilon_{u,m}} e^{j2\pi\frac{m((q-n)S_F+p-s)}{N}} \qquad (5)$$

En cas de synchronisation parfaite, ce terme est nul sauf pour n = q. Cette expression prend en compte l'atténuation du canal par la présence de la fonction H.

Le signal reçu peut alors s'écrire de la façon suivante :

$$\hat{d}_0[q] = \sum_{k=0}^{K-1}\sum_{n=0}^{D-1}\sum_{p=0}^{S_F-1}\sum_{u=0}^{S_T-1}\sum_{s=0}^{S_F-1} \sqrt{P_k}\, c_0^*[pS_T+u] g_u[qS_F+p] T_u(n,q)(s,p) c_k[sS_T+u] d_k[n]$$

$$+ \sum_{p=0}^{S_F-1}\sum_{i=0}^{S_T-1} g_i[qS_F+p] c_0^*[pS_T+i] w_i[qS_F+p] \qquad (6)$$

On cherche ensuite à écrire cette équation avec des matrices et des vecteurs.

Ceci permettra ensuite d'appliquer des résultats issus de la théorie des matrices aléatoires.

On définit tout d'abord les matrices G(q) (matrice d'égalisation, de taille LxL), Q (matrice des puissances autre que celles de l'utilisateur « 0 », de taille (K-1)x(K-1)), U (matrice des codes autres que celui de l'utilisateur « 0 », de taille Lx(K-1)) et le vecteur $\tilde{d}[n]$ contenant les (K-1) symboles des utilisateurs interférant avec l'utilisateur 0 dans la n$^{\text{ième}}$ sous-bande :

$$G(q) = \begin{bmatrix} G_0(q) & & & & \\ & G_1(q) & & & \\ & & \ddots & & \\ & & & \ddots & \\ & & & & G_{S_F-1}(q) \end{bmatrix}$$

$$G_p(q)_{iv} = \begin{cases} G_p(q)_{ii} = g_i(qS_F+p) \ pour \ i=0,...,S_T-1 \\ G_p(q)_{iv} = 0 \ pour \ i \neq v \end{cases}$$

$$Q = \begin{bmatrix} P_1 & & & & \\ & P_2 & & & \\ & & \ddots & & \\ & & & \ddots & \\ & & & & P_{K-1} \end{bmatrix}$$

$$U = (c_1....c_{K-1})$$

$$\tilde{d}[n] = (d_1[n],...,d_{K-1}[n])^T \qquad (7)$$

($C_k$ est un vecteur colonne).

Puis sont définies les matrices A(n,q) (de taille LxL) :

$$A(n,q)_{pS_T+u,sS_T+v} = \begin{cases} T_u(n,q)(s,p) \text{ si } u = v \\ 0 \text{ sinon} \end{cases}, \text{pour } \{p,s\} = 0,...,S_F - 1 \text{ et}\{u,v\} = 0,...,S_T - 1 \tag{8}$$

Ces matrices représentent l'atténuation des canaux.

On rappelle en effet que l'expression de Tu prend en compte l'atténuation du canal par la présence de la fonction H dans cette expression (voir équation (5)).

Dans le cas de synchronisation parfaite, cette expression (8) est nulle sauf pour n = q.

Avec ces notations, l'équation (4) peut s'écrire :

$$\hat{d}_0[q] = I_0 d_0[q] + I_1 + I_2 + I_3$$
$$I_0 = \sqrt{P_0}\, c_0^H G(q) A(q,q,) c_0$$
$$I_1 = \sqrt{P_0} \sum_{\substack{n=0 \\ n \neq q}}^{D-1} c_0^H G(q) A(n,q) c_0 d_0[n] \tag{9}$$
$$I_2 = \sum_{n=0}^{D-1} c_0^H G(q) A(n,q,) U \sqrt{Q}\, \tilde{d}[n]$$
$$I_3 = c_0^H G(q) w[q]$$

équations dans lesquelles :

- $I_0$ est l'amplitude du signal utile après égalisation et corrélation,
- $I_1$ représente les interférences générées par les données de l'utilisateur 0 dans les autres sous-bandes,
- $I_2$ est le bruit d'accès multiple créé par les autres codes d'étalement,
- $I_3$ est le bruit gaussien filtré par l'égaliseur et la séquence de l'utilisateur 0.

Les sources de données sont supposées indépendantes et identiquement distribuées (iid) et de moyenne nulle. De plus, les symboles transmis par un même utilisateur dans différentes sous-bandes sont aussi supposées iid.

Avec ces hypothèses, $I_1$, $I_2$, et $I_3$ sont indépendants, et le RSIB de l'utilisateur 0 dans la sous-bande q est :

$$RSIB_0[q] = \frac{E|I_0|^2}{E|I_1|^2 + E|I_2|^2 + E|I_3|^2} \tag{10}$$

Le RSIB peut ensuite être évalué pour un système OFDM-CDMA exploitant simultanément un étalement dans les domaines temporel et fréquentiel.

En supposant que :

$$E\left|d_0[n]d_0[n]^*\right|^2 = \begin{cases} 1 \sin = p \\ 0 \sin on \end{cases} \text{ et } \quad E\left|\tilde{d}[n]\tilde{d}[p]^H\right|^2 = \begin{cases} I_K \sin = p \\ 0 \sin on \end{cases},$$

(cette hypothèse est toujours valable dans le systèmes de communications mobiles), il peut être démontré que :

$$E|I_0|^2 = P_0 \left| c_0^H G(q) A(q,q,) c_0 \right|^2$$

$$E|I_1|^2 = P_0 \sum_{\substack{n=0 \\ n \neq q}}^{D-1} \left| c_0^H G(q) A(n,q,) c_0 \right|^2$$

$$(11)$$

$$E|I_2|^2 = \sum_{n=0}^{D-1} c_0^H G(q) A(n,q,) U Q U^H A(n,q,)^H G(q)^H c_0$$

$$E|I_3|^2 = \sigma^2 tr\left( G(q) G(q)^H \right)$$

Le calcul du RSIB consiste donc à injecter les résultats de l'équation (11) dans (10).

On observe cependant que les calculs dépendent de la valeur des chips des différents codes d'étalement mis en oeuvre.

Ceci permet de tenir compte de l'orthogonalité des codes.

Malheureusement, ceci est très pénalisant en pratique car les calculs de l'équation (11) sont très lourds à entreprendre (d'où un temps de calcul important) et doivent être recommencés dès qu'un code d'étalement est changé du fait de la présence de c0, c0H, et de la matrice U.

On souhaite donc calculer ces expressions indépendamment de la valeur des codes d'étalement, tout en tenant compte de la propriété d'orthogonalité des codes.

Pour obtenir ce résultat, on utilise deux résultats provenant de la théorie des matrices aléatoires.

Tout d'abord, on applique une propriété initialement utilisée dans l'article de J. Evans and D.N.C Tse, « Large System Performance of Linear Multiuser Receivers in Multipath Fading Channels », IEEE Trans. on Information Theory, pages 2059-2078, September 2000.

Si A est une matrice déterministe uniformément bornée de taille LxL et $C_k = (C_k(0), ..., C_k(L-1))$ où les $C_k(i)$ sont des variables complexes aléatoires de moyenne nulle, de variance unitaire et de moment d'ordre 8 fini, alors, quel que soit k, et notamment k = 0 :

$$c_k^H A c_k \xrightarrow[L \to \infty]{} tr(A) \qquad (12)$$

Cette propriété est appliquée pour évaluer $E\left[|I_0|^2\right]$ et $E\left[|I_1|^2\right]$.

Ensuite, on applique un Lemme prouvé dans l'appendice IV de l'article de M. Chaufray, W. Hachem, and Ph. Loubaton, "Asymptotical Analysis of Optimum and Sub-Optimum CDMA Downlink MMSE Receivers", Submitted to Trans. on Information Theory, si C = (C0U) est une matrice aléatoire ayant une distribution de Haar, alors :

$$U Q U^H \xrightarrow[L \to \infty]{} \alpha \overline{P} \left( I - c_0 c_0^H \right) \qquad (13)$$

Cette formule permet de tenir compte de l'orthogonalité des codes utilisés.

$\alpha = K/L$ est la charge du système et $\overline{p} = \dfrac{1}{K} \sum_{k=0}^{K-1} p_k$ est la puissance moyenne reçue.

L'hypothèse de la distribution de Haar est purement technique. Les résultats obtenus sont cependant assez indépendants de cette hypothèse. Des résultats de simulation obtenus avec une matrice U extraite de la matrice de Walsh-Hadamard sont d'ailleurs très proches de ceux prédits par la théorie.

Ce Lemme est utilisé pour évaluer $E\left[|I_2|^2\right]$.

Si les coefficients de l'égaliseur sont indépendants des codes d'étalements (par exemple MRC, EGC, ZF ou MMSEC conventionnels), on obtient les expressions suivantes :

$$E|I_0|^2 = P_0 \left| tr\big(G(q)A(q,q)\big) \right|^2$$

$$E|I_1|^2 = P_0 \sum_{\substack{n=0 \\ n \neq q}}^{D-1} \left| tr\big(G(q)A(n,q)\big) \right|^2$$

$$E|I_2|^2 = \alpha \overline{p} \sum_{n=0}^{D-1} \left( tr\big(G(q)A(n,q)A(n,q)^H G(q)^H\big) - \left| tr\big(G(q)A(n,q)\big) \right|^2 \right)$$

$$E|I_3|^2 = \sigma^2 tr\big(G(q)G(q)^H\big)$$

$$(14)$$

Ces formules se simplifient lorsqu'il n'y a pas d'erreur de synchronisation, puisque, alors, A(n, q) = 0 si n # q.

Le calcul des différents éléments intervenant dans le calcul du RSIB se ramène donc aux calculs de traces de matrices, ce qui est assez aisé à mettre en oeuvre.

Ce calcul ne fait intervenir que les matrices G et A, que le récepteur connaît de toute manière : A correspond en effet à l'estimation des canaux, et G est la matrice d'égalisation diagonale.

Ce calcul reste indépendant des codes utilisés, tout en en conservant l'orthogonalité.

Un mode de réalisation d'un procédé d'estimation du RSIB selon l'invention comporte donc le calcul des variables $E|I0|^2$, $E|I1|^2$, $E|I2|^2$, $E|I3|^2$ conformément aux équations (11) ou (14), en utilisant la matrice A (n, q) de(8).

Un procédé d'évaluation selon l'invention est aisément programmable dans un dispositif de réception tel qu'un téléphone mobile qui, comme déjà indiqué ci-dessus, est de toute manière amené à disposer des données relatives aux matrices A et G.

Un dispositif mobile et un système de transmission mettant en oeuvre l'invention vont être décrits en liaison avec les figures 9 et 10.

Le système comporte un réseau 60 de diffusion de téléphonie mobile (RTM), composé d'un serveur de réseau et d'une infrastructure de transmission, par exemple hertzienne, et d'un parc d'appareils de réception, sans fils, mobiles ou portables, par exemple des téléphones mobiles 80, 100, ... associés au réseau.

Des messages 130, 150 sont envoyés aux appareils portables 80, 100, tandis que ceux-ci réémettent des informations 70, 90 en retour, par exemple l'information relative au rapport RSIB calculée par chacun d'eux.

Chaque appareil mobile de communication offre une structure, telle qu'illustrée sur la figure 10, et est équipé d'un microprocesseur et de zones mémoires.

L'ensemble comporte au moins un processeur 122, un ensemble de mémoires RAM 124 (pour le stockage de données), de mémoires ROM 126 (par exemple pour le stockage d'instructions de programme). Ces divers éléments sont reliés par un bus 128.

Un élément périphérique, tel qu'un clavier (indiqué par les références 81 et 101 sur la figure 9), permet à un utilisateur d'entrer des données, par exemple en réponse à un message affiché sur son écran de visualisation.

D'autres éléments périphériques peuvent être utilisés pour effectuer l'entrée de données comme par exemple un dispositif de commande vocale ou un écran tactile.

Les données peuvent être également entrées en utilisant une combinaison de périphériques tels que ceux indiqués ci-dessus à titre d'exemple.

La référence 125 désigne des moyens de gestion d'entrées 127 et de sorties 129.

Chaque appareil peut aussi être considéré comme mettant en oeuvre les fonctionnalités décrites ci-dessus en liaison avec la figure 7.

Des données relatives à un système d'exploitation sont mémorisées dans une zone mémoire de chaque appareil mobile.

Dans le cas d'un téléphone mobile peut être ajoutée une carte SIM (GSM) ou USIM (UMTS) et des moyens de lecture de cette carte.

Des données de programme pour calculer le rapport RSIB comme expliqué ci-dessus sont chargées dans une zone mémoire de chaque appareil mobile.

Un dispositif mobile tel que les dispositifs 81, 101 dispose de moyens de mémorisation pour mémoriser les données relatives aux matrices A et G, ainsi que les divers paramètres utilisés dans les formules (14) ci-dessus.

Le calcul du RSIB peut être effectué par chaque dispositif mobile lui-même, puis envoyé à la station 60 émettrice de base qui, à partir des informations RSIB des différents utilisateurs, va pouvoir ajuster divers paramètres d'émission (par exemple la puissance allouée à tel ou tel utilisateur, ou le débit alloué à chaque utilisateur).

Comme on l'a déjà indiqué, l'estimation faite selon l'invention est plus fiable que celle qui était effectuée jusqu'à maintenant.

Elle permet donc une gestion améliorée des paramètres de fonctionnement d'une station émettrice de base, puisque celle-ci peut disposer d'une information plus fiable.

Malgré les diverses hypothèses faites pour obtenir les formules (14) ci-dessus, celles-ci restent plus généralement valables pour fournir une estimation du rapport RSIB meilleure que dans l'art antérieur.

**Revendications**

1. Procédé d'estimation du rapport signal à interférence plus bruit, RSIB, d'une transmission de type OFDM - CDMA, cette dernière mettant en oeuvre des codes d'étalement Ck, **caractérisé en ce que** ce rapport est estimé indépendamment de la valeur de ces codes selon la formule :

$$RSIB_0[q] = \frac{E|I_0|^2}{E|I_1|^2 + E|I_2|^2 + E|I_3|^2}$$

avec les formules suivantes :

$$E|I_0|^2 = P_0 \left| tr\left(G(q)A(q,q)\right) \right|^2$$

$$E|I_1|^2 = P_0 \sum_{\substack{n=0 \\ n \neq q}}^{D-1} \left| tr\left(G(q)A(n,q)\right) \right|^2$$

$$E|I_2|^2 = \alpha \bar{p} \sum_{n=0}^{D-1} \left( tr\left(G(q)A(n,q)A(n,q)^H G(q)^H\right) - \left| tr\left(G(q)A(n,q)\right) \right|^2 \right)$$

$$E|I_3|^2 = \sigma^2 tr\left(G(q)G(q)^H\right)$$

dans lesquelles :

- $I_0$ est l'amplitude du signal utile pour un utilisateur après égalisation et corrélation,
- $I_1$ représente les interférences générées par les données de l'utilisateur considéré dans les autres sous-bandes,
- $I_2$ est le bruit d'accès multiple créé par les autres codes d'étalement,
- $I_3$ est le bruit gaussien filtré par l'égaliseur et la séquence de l'utilisateur considéré,
- $\alpha$ est la charge du système et $\bar{p}$ est la puissance moyenne reçue,
- P0 est la puissance du signal étalé avec le code d'étalement dont on souhaite calculer le RSIB,
- A et G sont respectivement les matrices d'atténuation du canal et d'égalisation,
- D est le nombre de symboles de données par code sur $S_T$ symboles OFDM, et $S_T$ est le facteur d'étalement dans le domain temporel,
- q est la sous bande dans laquelle le RSIB est calculé.
- $\sigma^2$ est la variance du bruit gaussien additif

2. Procédé selon la revendication 1, dans lequel les codes d'étalement sont à une ou deux dimensions.

3. Procédé de réception de signaux transmis selon une transmission de type OFDM - CDMA, dans lequel il est procédé à une égalisation, puis à un procédé d'estimation, indépendante des codes d'étalement, du rapport RSIB de la transmission selon l'une des revendications 1 à 2.

4. Procédé selon la revendication 3, dans lequel l'égalisation est de type ZF ou réalise un procédé de type MRC ou EGC ou MMSEC

5. Procédé d'émission de signaux dans lequel :

   - des signaux sont transmis par un dispositif transmetteur (60) vers des dispositifs de téléphonie sans fil (80 , 100),
   - au moins un desdits dispositifs calcule ou estime le rapport RSIB de la transmission selon l'une des revendications 1 ou 2,
   - ce rapport est retransmis au dispositif transmetteur.

6. Dispositif (80, 100) de téléphonie sans fil comportant des moyens (122, 124, 126) de calcul du rapport signal à interférence plus bruit, RSIB, d'une transmission de type OFDM - CDMA, cette dernière mettant en oeuvre des codes d'étalement Ck, **caractérisé en ce que** ce rapport est estimé indépendamment de la valeur de ces codes selon la formule :

$$RSIB_0[q] = \frac{E|I_0|^2}{E|I_1|^2 + E|I_2|^2 + E|I_3|^2}$$

avec les formules suivantes :

$$E|I_0|^2 = P_0 |tr(G(q)A(q,q))|^2$$

$$E|I_1|^2 = P_0 \sum_{\substack{n=0 \\ n \neq q}}^{D-1} |tr(G(q)A(n,q))|^2$$

$$E|I_2|^2 = \alpha\overline{p} \sum_{n=0}^{D-1} \left( tr(G(q)A(n,q)A(n,q)^H G(q)^H) - |tr(G(q)A(n,q))|^2 \right)$$

$$E|I_3|^2 = \sigma^2 tr(G(q)G(q)^H)$$

dans lesquelles :

   - $T_0$ est l'amplitude du signal utile pour un utilisateur après égalisation et corrélation,
   - $I_1$ représente les interférences générées par les données de l'utilisateur considéré dans les autres sous-bandes,
   - $I_2$ est le bruit d'accès multiple créé par les autres codes d'étalement,
   - $I_3$ est le bruit gaussien filtré par l'égaliseur et la séquence de l'utilisateur considéré,
   - $\alpha$ est la charge du système et $\overline{p}$ est la puissance moyenne reçue,
   - P0 est la puissance du signal étalé avec le code d'étalement dont on souhaite calculer le RSIB,
   - A et G sont respectivement les matrices d'atténuation du canal et d'égalisation,
   - D est le nombre de symboles de données par code sur $S_T$ symboles OFDM, et $S_T$ est le facteur d'étalement dans le domain temporel,
   - q est la sous bande dans laquelle le RSIB est calculé.
   - $\sigma^2$ est la variance du bruit gaussien additif

**Claims**

1. Method of estimating the signal to interference-plus-noise ratio, SINR, of an OFDM - CDMA type transmission using spread codes ck, **characterized in that** this ratio is estimated independently of the value of these codes according to the following formula:

$$SINR_0[q] = \frac{E|I_0|^2}{E|I_1|^2 + E|I_2|^2 + E|I_3|^2}$$

using the following formulas :

$$E|I_0|^2 = P_0 |tr(G(q)A(q,q))|^2$$

$$E|I_1|^2 = P_0 \sum_{\substack{n=0 \\ n \neq q}}^{D-1} |tr(G(q)A(n,q))|^2$$

$$E|I_2|^2 = \alpha \bar{p} \sum_{n=0}^{D-1} \left( tr(G(q)A(n,q)A(n,q)^H G(q)^H) - |tr(G(q)A(n,q))|^2 \right)$$

$$E|I_3|^2 = \sigma^2 tr(G(q)G(q)^H)$$

in which:

   - $I_0$ is the amplitude of the useful signal for a user after equalisation and correlation,
   - $I_1$ represents interference generated by data of the user considered in the other sub-bands,
   - $I_2$ is the multiple access noise created by other spread codes,
   - $I_3$ is the Gaussian noise filtered by the equaliser and the sequence of the user considered,
   - $\alpha$ is the system load and $\bar{p}$ is the average received power,
   - P0 is the power of the signal spread with the spread code for which the SINR is to be calculated,
   - A and G are the attenuation channel and equalisation matrices respectively,
   - D is the number of data symbols per code on $S_T$ OFDM symbols, and $S_T$ is the spread factor in the time domain,
   - q is the sub-band in which the SINR is calculated,
   - $\sigma^2$ is the variance of the additive Gaussian noise.

2. Method according to claim 1, in which the spread codes are two-dimensional or single dimensional.

3. Method for reception of signals transmitted using an OFDM - CDMA type transmission, in which an independent equalisation of spread codes is made followed by a method of estimating the SINR ratio of the transmission according to one of claims 1 or 2.

4. Method according to claim 3, in which the equalisation is of the ZF type or carries out a method of MRC type, or EGC, or MMSEC.

5. Method of transmitting signals in which:

   - signals are transmitted by a transmitter device (60) towards wireless telephony devices (80, 100),

- at least one of said devices calculates or estimates the SINR ratio of the transmission according to one of claims 1 or 2,
- this ratio is retransmitted to the transmitter device.

**6.** Wireless telephony device (80, 100) comprising means (122, 124, 126) of calculating the signal to interference-plus-noise ratio, SINR, of an OFDM - CDMA type transmission which uses spread codes ck, **characterized in that** this ratio is estimated independently of the value of these codes according to the following formula:

$$SINR_0[q] = \frac{E|I_0|^2}{E|I_1|^2 + E|I_2|^2 + E|I_3|^2}$$

using the following formulas:

$$E|I_0|^2 = P_0 |tr(G(q)A(q,q))|^2$$

$$E|I_1|^2 = P_0 \sum_{\substack{n=0 \\ n \neq q}}^{D-1} |tr(G(q)A(n,q))|^2$$

$$E|I_2|^2 = \alpha \bar{p} \sum_{n=0}^{D-1} \left( tr\left(G(q)A(n,q)A(n,q)^H G(q)^H\right) - |tr(G(q)A(n,q))|^2 \right)$$

$$E|I_3|^2 = \sigma^2 tr\left(G(q)G(q)^H\right)$$

in which:

- $I_0$ is the amplitude of the useful signal for a user after equalisation and correlation,
- $I_1$ represents interference generated by data of the user considered in the other sub-bands,
- $I_2$ is the multiple access noise created by other spread codes,
- $I_3$ is the Gaussian noise filtered by the equaliser and the sequence of the user considered,
- $\alpha$ is the system load and $\bar{p}$ is the average received power,
- P0 is the power of the signal spread with the spread code for which the SINR is to be calculated,
- A and G are the attenuation channel and equalisation matrices respectively,
- D is the number of data symbols per code on $S_T$ OFDM symbols, and $S_T$ is the spread factor in the time domain,
- q is the sub-band in which the SINR is calculated,
- $\sigma^2$ is the variance of the additive Gaussian noise.

**Patentansprüche**

**1.** Verfahren zur Abschätzung des Verhältnisses aus Signal und Interferenz plus Rauschen, SNIR, einer Übertragung vom Typ OFDM-CDMA, wobei die letztere Spreizcodes ck umsetzt,
**dadurch gekennzeichnet, dass** das Verhältnis unabhängig von dem Wert dieser Codes nach der Formel:

$$SNIR_0[q] = \frac{E|I_0|^2}{E|I_1|^2 + E|I_2|^2 + E|I_3|^2}$$

mit den folgenden Formeln:

$$E|I_0|^2 = P_0 \left| tr\left(G(q)A(q,q)\right) \right|^2$$

$$E|I_1|^2 = P_0 \sum_{\substack{n=0 \\ n \neq q}}^{D-1} \left| tr\left(G(q)A(n,q)\right) \right|^2$$

$$E|I_2|^2 = \alpha\overline{p} \sum_{n=0}^{D-1} \left( tr\left(G(q)A(n,q)A(n,q)^H G(q)^H\right) - \left| tr\left(G(q)A(n,q)\right) \right|^2 \right)$$

$$E|I_3|^2 = \sigma^2 tr\left(G(q)G(q)^H\right)$$

abgeschätzt wird, wobei:

- $I_0$ die Amplitude des Nutzsignals für einen Nutzer nach Entzerrung und Korrelation ist,
- $I_1$ die Interferenzen repräsentiert, welche durch die Daten des betrachteten Nutzers in den anderen Unterbändern erzeugt werden,
- $I_2$ das Rauschen durch Vielfachzugriff ist, erzeugt durch die anderen Spreizcodes,
- $I_3$ das durch den Entzerrer und die Sequenz des betrachteten Nutzers gefilterte Gauß-Rauschen ist,
- $\alpha$ die Ladung des Systems ist und $\overline{p}$ die mittlere empfangene Leistung ist,
- $P_0$ die Leistung des gespreizten Signals ist, mit dem Spreizcode, dessen SNIR berechnet werden soll,
- A und G Dämpfungs-Matrizen des Kanals beziehungsweise der Entzerrung sind,
- D die Anzahl von Daten-Symbolen pro Code auf $S_T$ OFDM Symbolen ist, und $S_T$ der Faktor der Spreizung im Zeitbereich ist,
- q das Unterband ist, in welchem das SNIR berechnet wird,
- $\sigma^2$ die Varianz des zusätzlichen Gauß-Rauschens ist.

**2.** Verfahren nach Anspruch 1, wobei die Spreizcodes solche mit einer oder zwei Dimensionen sind.

**3.** Verfahren zum Empfang von Signalen, welche durch eine Übertragung vom Typ OFDM-CDMA übertragen werden, wobei eine Entzerrung und dann ein Verfahren zur von den Spreizcodes unabhängigen Abschätzung des Verhältnisses SNIR der Übertragung gemäß einem der Ansprüche 1 bis 2 durchgeführt wird.

**4.** Verfahren nach Anspruch 3, wobei die Entzerrung vom Typ ZF ist, oder ein Verfahren vom Typ MRC oder EGC oder MMSEC umsetzt.

**5.** Verfahren zur Emission von Signalen, wobei:

- Signale durch eine Übertragungsvorrichtung (60) zu drahtlosen Telekommunikationseinrichtungen (80, 100) übertragen werden,
- wenigstens eine dieser Einrichtungen das Verhältnis SNIR der Übertragung nach einem der Ansprüche 1 oder 2 berechnet oder abschätzt,
- dieses Verhältnis zu der Übertragungseinrichtung rückübertragen wird.

**6.** Drahtlose Telekommunikationseinrichtung (80, 100), umfassend Mittel (122, 124, 126) zur Berechnung des Verhältnisses aus Signal und
Interferenz plus Rauschen SNIR (RSIB) einer Übertragung vom Typ OFDM-CDMA, wobei die letztere Spreizcodes Ck umsetzt, **dadurch gekennzeichnet, dass** das Verhältnis unabhängig von dem Wert dieser Codes nach der Formel:

$$SNIR_0[q] = \frac{E|I_0|^2}{E|I_1|^2 + E|I_2|^2 + E|I_3|^2}$$

mit den folgenden Formeln:

$$E|I_0|^2 = P_0 \left| tr\big(G(q)A(q,q)\big) \right|^2$$

$$E|I_1|^2 = P_0 \sum_{\substack{n=0 \\ n \neq q}}^{D-1} \left| tr\big(G(q)A(n,q)\big) \right|^2$$

$$E|I_2|^2 = \alpha \overline{p} \sum_{n=0}^{D-1} \left( tr\big(G(q)A(n,q)A(n,q)^H G(q)^H\big) - \left| tr\big(G(q)A(n,q)\big) \right|^2 \right)$$

$$E|I_3|^2 = \sigma^2 tr\big(G(q)G(q)^H\big)$$

abgeschätzt wird, wobei:

- $I_0$ die Amplitude des Nutzsignals für einen Nutzer nach Entzerrung und Korrelation ist,
- $I_1$ die Interferenzen repräsentiert, welche durch die Daten des betrachteten Nutzers in den anderen Unterbändern erzeugt werden,
- $I_2$ das Rauschen durch Vielfachzugriff ist, erzeugt durch die anderen Spreizcodes,
- $I_3$ das durch den Entzerrer und die Sequenz des betrachteten Nutzers gefilterte Gauß-Rauschen ist,
- $\alpha$ die Ladung des Systems ist und $\overline{p}$ die mittlere empfangene Leistung ist,
- $P_0$ die Leistung des gespreizten Signals ist, mit dem Spreizcode, dessen SNIR berechnet werden soll,
- A und G Dämpfungs-Matrizen des Kanals beziehungsweise der Entzerrung sind,
- D die Anzahl von Daten-Symbolen pro Code auf $S_T$ OFDM Symbolen ist, und $S_T$ der Faktor der Spreizung im Zeitbereich ist,
- q das Unterband ist, in welchem das SNIR berechnet wird,
- $\sigma^2$ die Varianz des zusätzlichen Gauß-Rauschens ist.

FIG. 1

FIG. 2

FIG. 3

temps

$S_F$

FIG. 4

fréquence

$n^{ième}$ symbole
OFDM

temps

FIG. 5

fréquence

$S_T$

$S_T$
temps

$S_F$

FIG. 6

fréquence

40  42  44  46

36  38

dK-1(n)

d0(n)

FIG. 7

48

FIG. 8

FIG. 9

FIG. 10

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **W. ZHENDAO ; G. B. GIANNAKIS.** Wireless Multi-carrier Communications - Where Fourier meets Shannon. *IEEE Signal Processing Magazine,* Mai 2000, vol. 17 (3
- **H.SCHMIDT et al.** Channel Tracking in Wireless OFDM Systems. *SCI 2001,* 22 Juillet 2001
- **STEENDAM, MOENECLAEY.** The effect of synchronisation errors on MC-CDMA performance. *IEEE international conference on communications,* 06 Juin 1999, 1510-1514

- **MARYLINE HÉLARD ; RODOLPHE LE GOUABLE ; J.F HÉLARD ; J.Y. BAUDAIS.** Multi-carrier CDMA techniques for future wideband wireless networks. *Ann. Telecom,* 2001, vol. 56 (˚5-6), 260-274
- **J. EVANS ; D.N.C TSE.** Large System Performance of Linear Multiuser Receivers in Multipath Fading Channels. *IEEE Trans. on Information Theory,* Septembre 2000, 2059-2078